# EUROPEAN PATENT APPLICATION

(11) **EP 1 968 051 A1**
(43) Date of publication of application: **10.09.2008**
(21) Application number: 07103503.4
(22) Date of filing: 05.03.2007
(51) Int. Cl.: G11B 7/09

(54) **Pickup for accessing moving storage media and drive having the pickup**

(71) Applicant: Deutsche Thomson OHG, 30625 Hannover (DE)
(72) Inventor: Bammert, Michael, 78739 Hardt (DE); Suzuki, Tsuneo, 78087 Mönchweiler (DE); Dupper, Rolf, 78050 Villingen-Schwenningen (DE)
(74) Representative: Thies, Stephan

(57) **Abstract**

A pickup (P) for accessing moving storage media, carrying substantially parallel information tracks (T), has a carrier (C), an actuator (A) and suspension elements joining the carrier (C) and the actuator (A). The actuator (A) has a body (B) and a lens (3) and is movable in a tracking direction (X) and in a focus direction (Y). The suspension elements extend substantially in an information direction (Z) orthogonal to the tracking direction (X) and the focus direction (Y) and are arranged at opposite sides of the body (B) in the tracking direction (X), where they are stacked at each side in focus direction (y). Each suspension element has two parts, where a first part is connected to the carrier (C) and a second part is connected to the body (B) of the actuator (A). According to the invention, the suspension elements are constituted as suspension wires (4), where each suspension wire (4) is folded, where the first part and the second part are constituted as a first side (10) and a second side (11) of the folded suspension wire (4) and where the both sides (10, 11) form an acute angle with each other.

## Description

### BACKGROUND OF THE INVENTION

### FIELD OF THE INVENTION

The present invention is related to a pickup for accessing moving storage media according to the preamble of claim 1. Pickups are used as part of a recording and/or reproducing apparatus, e.g. of a DVD player, a DVD recorder or of similar apparatuses.

### DESCRIPTION OF THE PRIOR ART

Pickups for accessing moving storage media, carrying substantially parallel information tracks, record and/or reproduce information with respect to the moving storage media, namely a turning disk, while moving in the radial direction of the disk. In the pickup, typically, one or more light beams are generated and focused onto a target or scanning spot on a layer within the disk. Readout light beams coming from the disk are projected onto a photo detector, where they are converted into electrical signals for further evaluation.

A pickup comprises a fixed unit, referred to as a carrier, a movable unit, referred as to an actuator, with a body and a lens, and suspension elements joining the carrier and the actuator. The suspension elements are both movably supporting the actuator, as well as applying currents to coils, which are arranged on the body of the actuator. The coils and a magnet configuration, all together referred to as a magnetic driving portion, initiate the movements of the actuator. By moving the actuator with the lens, the beam spot can be accurately located on the disk.

A pickup, referred to as an optical system supporting device, is described in US 5 428 481 A. The pickup comprises a fixed base plate, a movable holding member for holding an optical system and suspension elements constituted as springs for supporting the holding means, where the base plate carries the springs. The holding member is movable in a focus direction orthogonal to the media and in a tracking direction orthogonal to the tracks. The springs are arranged at opposite sides of the holding member in the tracking direction and stacked in focus direction, at each side.

Each spring comprises a parallel portion oriented parallel to a tangential direction, which is perpendicular to both the tracking direction and the focus direction, and a bending portion, which extends toward an optical axis. The springs with the two portions extend substantially in the tangential direction between a fixing member of the base plate and a fixing member of the holding member, where the bending portions of the springs are bent toward the optical axis. Therefore, the actuator is made small in width with respect to the tracking direction; and thus the holding member can be made light in weight such that the driving sensitivity of the holding member is improved.

### SUMMARY OF THE INVENTION

It is desirable to further improve a pickup according to the preamble of claim 1 with respect to the movements of the actuator. In particular, it is desirable to reduce the deflection of the actuator in an information direction orthogonal to the tracking direction and the focus direction when being moved in the focus direction and/or in the tracking direction.

According to the invention this is achieved by the features of claim 1. Possible advantageous developments of the invention are specified in the dependent claims.

A pickup for accessing moving storage media carrying substantially parallel information tracks has a carrier, an actuator with a body and a lens and suspension elements joining the carrier and the actuator. The actuator is movable in a tracking direction and a focus direction. The suspension elements extend substantially in an information direction orthogonal to the tracking direction and the focus direction, which corresponds to the so-called tangential direction.

The suspension elements are arranged at opposite sides of the body in the tracking direction and are stacked in focus direction at each side. Each suspension element has two parts, where a first part is connected to the carrier and a second part is connected to the body of the actuator.

According to the invention, the suspension elements are constituted as suspension wires, where each suspension wire is folded. I.e. the first part and the second part of the suspension elements are constituted as a first side and a second side of the folded suspension wires. The both sides of the suspension wires form an acute angle with one another in order to extend closely side by side.

As a result of the folded structure of the suspension wires according to invention, the deflections of the actuator, in the information direction, when being moved in the focus direction and/or in the tracking direction, caused by the two parts of the suspension wires, compensate one another, at least partially. In the magnetic driving portion, a smaller gap for the actuator movements can be provided and the sensitivity of coils initiating the actuator movements can be improved.

By providing a pickup with folded suspension wires, the length of the pickup in the information direction can be shortened in order to improve the overall compactness of the pickup.

Preferably, the both sides of a suspension wire are arranged in a plane spanned by the tracking direction and the information direction, i.e. parallel to the surface of the moving storage media.

In one form of a pickup according to the invention, the two sides of the suspension wires have nearly the same length, so that a carrier connection means connecting the end of first side to the carrier and an actuator connection means connecting the end of the second side to the body are arranged side by side.

As an alternative, the first side of the suspension wires is longer than the second side, so that, in the information direction, the carrier connection means is distantly arranged with reference to the actuator connection means. With other words, the carrier connection means is arranged, in the information direction, at the back of the actuator connection means and not side by side to the actuator connection means. As a result, the width of the actuator in tracking direction is kept small.

Preferably, the actuator connection means is constituted as a soldered suspension point, which connects the end of the second side of the suspension wires with the carrier mechanically and electrically. Preferably, the soldered suspension points are arranged at or near an axis through the centre of gravity of the actuator.

As an alternative, the actuator connection means comprises a guiding element for mechanical connection, which is arranged at or near the axis through the centre of gravity of the actuator, and a separate soldered point for electrical connection. The separation of the mechanical and the electrical connection unloads the electrical connection from mechanical stress.

As an alternative, the body of the actuator comprises additional components. Such components can be optical ones such as a laser diode, a detector, further diodes and/or optical elements. They can further be electronic components such as a modulator or electronic circuitry for laser power control and/or photo detector signal conditioning.

Preferably, a moving storage media drive is provided with a pickup according to the invention.

The carrier being an ensemble of rigidly connected elements does not preclude that typically the pickup as a whole, including carrier, suspension wires and actuator, is movable and is being moved in a direction orthogonal to information tracks on the storage medium, so that all storage locations on the medium can be accessed. In this, accessing shall encompass reading access for reading information from the storage medium, or writing access for writing or recording information into the storage medium, or combinations of reading and writing access.

One possible form of moving storage media is disks carrying concentric circular or spiral information tracks, with the access being of reflective type where an access light beam is being generated and focused onto the information track and a reflected light beam coming back from and being modulated by the information track is being focused onto a photo detector arrangement and being evaluated. However, it is within the scope of this invention to be used on other forms of optical recording medium having information tracks in layers, like those in card or tape form; and regardless whether the access principle is of a reflective or of a transductive type.

### BRIEF DESCRIPTION OF THE DRAWINGS

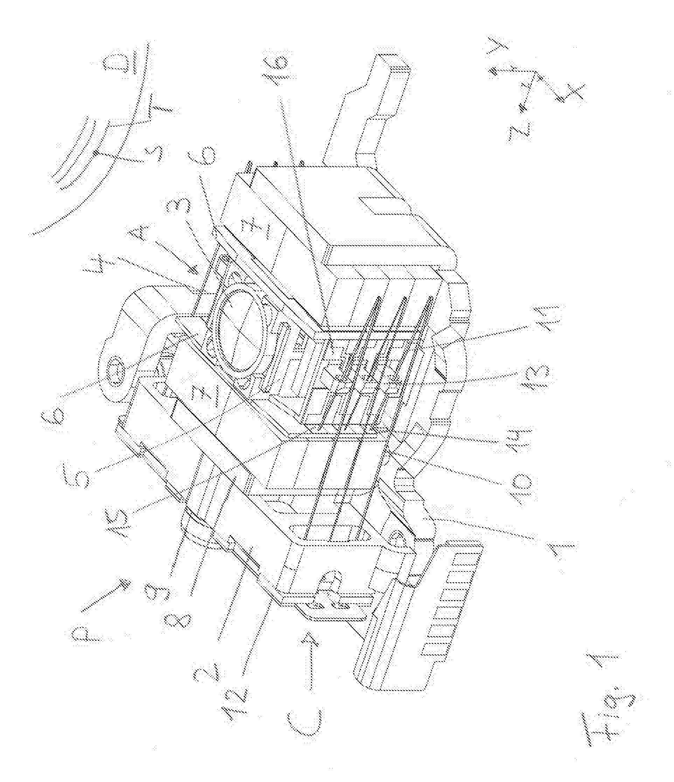

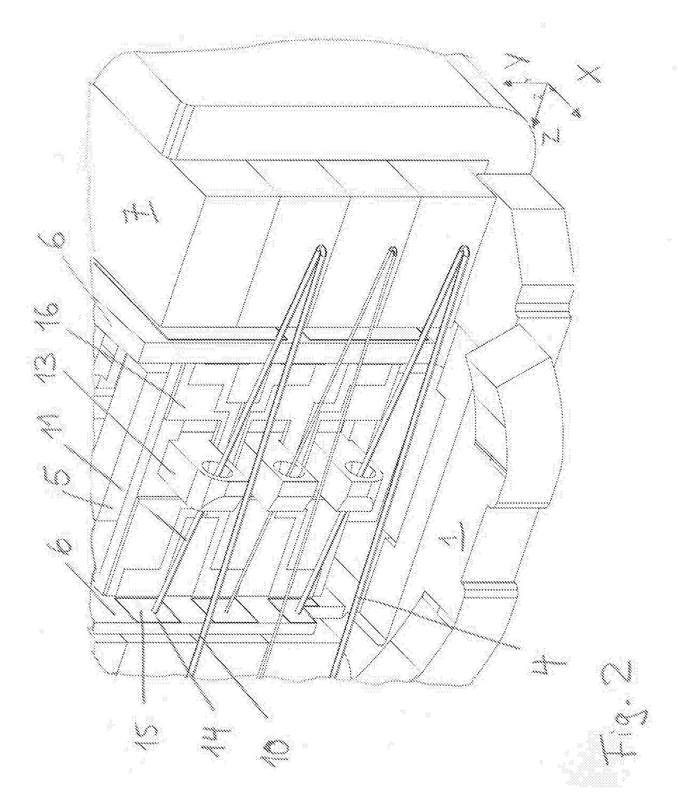

The invention will be explained in more detail using one embodiment, illustrated in figures 1 and 2.

In the Figures:
- Figure 1: shows a simplified perspective view of a pickup of an embodiment of the invention and
- Figure 2: shows an enlarged detail of Figure 1.

### DETAILED DESCRIPTION OF AN EMBODIMENT OF THE INVENTION

With reference to **Figures 1** **and** **2****,** according to the invention a pickup P for accessing moving storage media, namely a disk D, has a carrier C with a base 1 and a holder 2, an actuator A with a body B and a lens 3 and suspension wires 4 joining the carrier C and the actuator A.

By means of the suspension with the suspension wires 4, the actuator A with the lens 3 is able to perform focus motion in a focus direction Y orthogonal to the disk D carrying substantially circular information tracks T shown in Figure 1 with strongly disproportionate distance. Additionally, the actuator A is able to perform tracking motion in a tracking direction X parallel to the surface of the disk D and orthogonal to the information tracks T. Additionally, the actuator A is able to perform so-called radial tilt motion by rotating around a information direction Z, orthogonal to the tracking direction and the focus direction, which is parallel to the tangent to the information tracks T at a scanning spot S.

The body B comprises a corpus 5 carrying the lens 3 and two printed circuit boards 6, which extend orthogonal to the information direction Z and are arranged at opposite sides of the corpus 5, i.e. at a back side in front of the holder 2 and at a front side. The printed circuit boards 6 carries at least tracking coils and focus coils, which are occluded in the Figures.

Six suspension wires 4 extend substantially in the information direction Z, where they are arranged in parallel to one another and oriented in the information direction Z. They are arranged symmetrically in respect to the body B, where three of the suspension wires 4 are arranged at each of two opposite sides in the tracking direction X of the body B. At each side of the body B, the three suspension wires 4 are stacked, i.e. are arranged on top of each other, in the focus direction Y. The suspension wires 4 connect the actuator A with the carrier C in a way that the actuator A is suspended over the base 1 of the carrier C.

The pickup P further comprises a magnet configuration with at least two magnets 7 fixed on the base 1. The magnets 7 are situated on the base 1 in front of the two opposite sides of the body B, in particular, in front of the two printed circuit boards 6 with the coils, in the information direction Z. The coils on the printed circuit boards 6 cooperate with the magnet configuration. The coils are formed as printed coils or as fine pattern coils on the printed coil boards 6.

The base 1 extends substantially in a plane orthogonal to the focus direction Y and parallel to the disk D, i.e. in the plane spanned by the tracking direction X and the information direction Z. The base 1 is connected with the holder 2 over a strap 8 by a screw 9.

According to the invention each suspension wire 4 is folded into a first side 10 and a second side 11, where the two sides 10, 11 of the suspension wires 4 form an acute angle with each other. The end of the first side 10 is connected to the carrier C by a carrier connection means, occluded in Figure 1, and the end of the second side 11 is connected to the body B of the actuator A by an actuator connection means. The two sides 10, 11 of a suspension wire 4 are arranged in a plane spanned by the tracking direction X and the information direction Z, i.e. the direction of the tracks T. The first side 10 is longer than the second side 11, so that, in the information direction Z, the carrier connection means is distantly arranged with reference to the actuator connection means.

The carrier connection means are constituted as soldering points on a holder printed circuit board 12. The holder printed circuit board 12 is located at that side of the holder 2 which is opposite to the actuator A. The holder 2 is constituted by a damping block with a damping material inside, which damps the suspension wires 4 extending through the holder 2.

Each actuator connection means comprises a guiding element 13 for mechanical connection and a soldered point 14 for electrical connection.

The guiding element 13 is constituted as a guiding eye, which is connected to the corpus 5 and arranged at an axis through the centre of gravity of the actuator A, in particular through an axis in the plane spanned by the tracking direction X and the information direction Z.

The soldered point 14 is distantly arranged with reference to the guiding element 13, in information direction Z, at the printed circuit board 6, which is located at the back side of the actuator A. The printed circuit board 6 is provided with metallised surfaces 15 for the soldered points 14. The actuator A also comprises an actuator printed circuit board 16, with extends in a plane spanned by the focus direction Y and the information direction Z and which electrically connects the two printed circuit boards 6. The details of the actuator connection means are best seen in Figure 2.

As an alternative, the suspension wires 4 are arranged in a plane spanned by the focus direction Y and the information direction Z, or a plane between this plane and the plane spanned by the tracking direction X and the information direction Z.

Independently of that, as an alternative, the actuator connection means is constituted as a soldered suspension point, which connects the end of the second side with the carrier C, simultaneously, in a mechanical and an electrical manner.

Independently of that, as an alternative, the two sides 10, 11 of the suspension wires 4 have nearly the same length, so that the carrier connection means connecting the end of the first side to the carrier C and the actuator connection means connecting the end of the second side to the body B are arranged side by side.

Independently of that, as an alternative, the body B comprises at least one additional optical or electronic component. The additional component is one of a laser diode, a photo detector, a laser power control circuit or a photo detector signal conditioning circuit.

A pickup P according to this invention is usable in the so-called slide or sled design of optical media drives, where it is shiftably fitted to a frame structure of the drive, with appropriate linear driving means for realising the shift, like linear motors or a motor driven threaded rod. Alternatively, the pickup P according to this invention is also usable in the so-called swivel arm design, where it is pivotably mounted on the end of an arm having a pivoting axis parallel to the focus direction. In that way, the pickup P is movable across the tracks T on the surface of the disk D along an arc which has its main extension in the tracking direction X.

## Claims

1. A pickup (P) for accessing moving storage media, carrying substantially parallel information tracks (T),
the pickup (P) having a carrier (C), an actuator (A) and suspension elements joining the carrier (C) and the actuator (A),
the actuator (A) having a body (B) and a lens (3) and being movable in a tracking direction (X) and in a focus direction (Y), and
the suspension elements extending substantially in an information direction (Z) orthogonal to the tracking direction (X) and the focus direction (Y),
being arranged at opposite sides of the body (B) in the tracking direction (X), and
being stacked at each side in focus direction (Y), where each suspension element has a first part and a second part, and where the first part is connected to the carrier (C) and the second part is connected to the body (B) of the actuator (A),
the pickup (P) **characterized in that**
the suspension elements are constituted as suspension wires (4), where each suspension wire (4) is folded, where the first part and the second part are constituted as a first side (10) and a second side (11) of the folded suspension wire (4) and where the two sides (10, 11) form an acute angle with each other.

2. A pickup (P) according to claim 1, where the two sides (10, 11) of a suspension wire (4) are arranged in a plane spanned by the tracking direction (X) and the information direction (Z).

3. A pickup (P) according to claim 1 or 2, where the first side (10) is longer than the second side (11) and where, in the information direction (Z), a carrier connecting the end of the first side (10) to the carrier is distantly arranged with reference to an actuator connection means connecting the end of the second side (11) to the body (B) of the actuator (A).

4. A pickup (P) according to one of claims 1 to 3, where the actuator connection means is constituted as a soldered suspension point, which connects the second side (11) with the carrier (C), simultaneously, in a mechanical and an electrical manner.

5. A pickup (P) according to one of claims 1 to 3, where the actuator connection means comprises a guiding element (13) for mechanical connection and a soldered point (14) for electrical connection.

6. A pickup (P) according to one of claims 1 to 5, where the body (B) comprises at least one additional optical or electronic component.

7. The pickup of Claim 6, where the additional component is one of a laser diode, a photo detector, a laser power control circuit or a photo detector signal conditioning circuit.

8. A moving storage media drive **characterised in that** it has a pickup (P) according to one of claims 1 to 7.
